# EUROPEAN PATENT APPLICATION

(11) **EP 4 501 798 A1**
(43) Date of publication of application: **05.02.2025**
(21) Application number: 22933872.8
(22) Date of filing: 28.03.2022
(51) Int. Cl.: B64F 1/305

(54) **AIRPORT GROUND ASSISTANCE EQUIPMENT**

(71) Applicant: ShinMaywa Industries, Ltd., Takarazuka-shi, Hyogo 665-8550 (JP)
(72) Inventor: AKEGAMI, Takeshi, Hyogo, 665-8550 (JP); KUNITAKE, Takashi, Hyogo, 665-8550 (JP)
(74) Representative: Dehns
(86) International application number: PCT/JP2022/015063
(87) International publication number: WO 2023/187915

(57) **Abstract**

Provided is airport ground support equipment that makes labor saving possible. One example of the airport ground support equipment according to the present invention includes: an accessor that allows, when the accessor is in an accessing state where the accessor is in close proximity to a parked aircraft (3) and a distal end of the accessor is adjacent to or in contact with the aircraft (3), a person and/or an article to move between the accessor and the aircraft (3) through an opening formed in a case where a door (3a) of the aircraft (3) has been opened; and an image presenter that is provided on the accessor and that presents an image of the accessing state of the accessor toward the aircraft (3) when the door (3a) of the aircraft (3) is in a closed state.

## Description

### Technical Field

The present invention relates to airport ground support equipment, such as a passenger boarding bridge and a passenger step car.

### Background Art

At an airport, various types of airport ground support equipment, such as a passenger boarding bridge and a passenger step car, are used. It should be noted that, in the present specification and the claims, the term "airport ground support equipment" is defined to encompass passenger boarding bridges. A passenger boarding bridge includes: a rotunda that is connected to a terminal building; a tunnel unit that is connected to the rotunda and that forms a walkway; and a cab that is connected to the distal end of the tunnel unit and that is to be docked with an aircraft.

When the cab gets docked with the aircraft, in general, a ground staff member such as an operator of the passenger boarding bridge visually checks, from the cab side, the docked state and whether or not there is any abnormality in the vicinity of a door of the aircraft. Also, when given a sign (such as a thumbs-up sign) through a window of the door from a cabin crew member inside the aircraft, the sign indicating that the door mode has been changed from an automatic mode to a manual mode, the ground staff member opens the door of the aircraft. On the other hand, in the case of undocking the cab from the aircraft, the ground staff member closes the door of the aircraft from the cab side, and visually checks whether or not there is any abnormality in the vicinity of the door. Also, when given a sign through the window of the door from the cabin crew member, the sign indicating that the door mode has been changed from the manual mode to the automatic mode, the ground staff member operates the passenger boarding bridge to undock the cab from the aircraft.

Thus, the operations of opening and closing the aircraft door are usually performed by the ground staff member, who stands by on the cab side, in such a manner that the ground staff member cooperates with the cabin crew member though the window of the door.

Patent Literature 1 describes a passenger boarding bridge that is provided with a lamp serving as a docking completion notifier. The lamp is provided at such a position that, when the cab gets docked with an aircraft, a cabin crew member can see the lamp through a window of a door of the aircraft. Patent Literature 1 further describes that, by turning on the lamp, the cabin crew member is notified of the completion of the docking, and when notified of the completion of the docking, the cabin crew member opens the door.

### Citation List

### Patent Literature

PTL 1: Japanese Patent No. 6720414

### Summary of Invention

### Technical Problem

However, after the cab of the passenger boarding bridge is docked with the aircraft, when opening the door of the aircraft, although the cabin crew member can check through the window of the door whether the lamp has been turned on, the cabin crew member cannot visually check the actual accessing state of the cab to the aircraft (i.e., the docked state of the cab with the aircraft) since it is a blind spot for the cabin crew member. For this reason, the operator or the like on the cab side of the passenger boarding bridge opens the door, including visually checking that there is no problem with opening the door.

Meanwhile, in the case of docking the passenger boarding bridge with the aircraft by remote operation from a central monitoring room or the like, it is not preferable from the viewpoint of labor saving if a person such as an operator needs to get into the cab in order to check a change in the door mode or to open the door of the aircraft.

Also, in the case of undocking the passenger boarding bridge from the aircraft by remote operation from a central monitoring room or the like, it is not preferable from the viewpoint of labor saving if a person such as an operator needs to get into the cab in order to close the door of the aircraft or to check the state of the door mode.

It should be noted that when technological advancement on autonomous operation and/or unmanned operation is made in the future also on other airport ground support equipment other than a passenger boarding bridge, such as a passenger step car, the same problem will arise at the time of docking/undocking the airport ground support equipment with/from an aircraft.

The present invention has been made to solve the above-described problems. An object of the present invention is to provide airport ground support equipment that makes labor saving possible.

### Solution to Problem

In order to achieve the above object, airport ground support equipment according to one aspect of the present invention includes: an accessor that allows, when the accessor is in an accessing state where the accessor is in close proximity to a parked aircraft and a distal end of the accessor is adjacent to or in contact with the aircraft, a person and/or an article to move between the accessor and the aircraft through an opening formed in a case where a door of the aircraft has been opened; and an image presenter that is provided on the accessor and that presents an image of the accessing state of the accessor toward the aircraft when the door of the aircraft is in a closed state.

According to the above configuration, a cabin crew member can check that the accessing state of the accessor is a proper state by looking at the image of the accessing state, which is presented by the image presenter. Therefore, it is not necessary for a person such as an operator to get into the accessor to notify the cabin crew member that the accessing state is a proper state. This makes labor saving possible at the time of docking the accessor with the aircraft.

The airport ground support equipment may further include an image capturer that is provided on the accessor and that captures an image including the distal end of the accessor when the accessor is in the accessing state. The image presenter may be a display that displays, toward the aircraft, the image captured by the image capturer.

The image presenter may be a mirror, and the mirror may be disposed on the accessor such that the accessing state of the accessor is visible from the aircraft side via a mirrored image shown on the mirror.

The airport ground support equipment may further include a first notifier that gives a notification toward the aircraft regarding a matter to be paid attention to before opening the door of the aircraft. This configuration makes it possible to notify a cabin crew member of the matter to be paid attention to before opening the door.

The first notifier may give a notification toward the aircraft to urge a change in a door mode of the aircraft from an automatic mode to a manual mode. In this manner, safety when the door is opened can be ensured.

The airport ground support equipment may further include: an image capturer that captures an image including a window of the door of the aircraft; an image determiner that analyzes the image captured by the image capturer and determines whether or not a cabin crew member in the aircraft has performed a predetermined action; and a second notifier that gives, based on a result of determination by the image determiner, a notification toward the aircraft regarding progress on checking steps at a time of opening the door of the aircraft. This configuration makes it possible to notify the cabin crew member of the progress on the checking steps at the time of opening the door.

The airport ground support equipment may further include a signal outputter that outputs, to a predetermined notifier, an undocking performable signal indicating that the accessor is undockable from the aircraft in a case where, after the door of the aircraft is opened temporarily and then closed, the image determiner analyzes the image captured by the image capturer and determines that the cabin crew member has performed the predetermined action indicating that a door mode of the aircraft has been changed from a manual mode to an automatic mode. According to this configuration, at the time of undocking the accessor from the aircraft, it is not necessary for a person such as an operator to get into the accessor to check with the cabin crew member about the door mode. This makes labor saving possible at the time of undocking the accessor from the aircraft.

The airport ground support equipment may further include: an image capturer that captures an image including a window of the door of the aircraft; an image determiner that analyzes the image captured by the image capturer and determines whether or not a cabin crew member in the aircraft has performed a predetermined action indicating that a door mode of the aircraft has been changed from a manual mode to an automatic mode; and a signal outputter that outputs, to a predetermined notifier, an undocking performable signal indicating that the accessor is undockable from the aircraft in a case where, after the door of the aircraft is opened temporarily and then closed, the image determiner analyzes the image captured by the image capturer and determines that the cabin crew member has performed the predetermined action.

According to the above configuration, the undocking performable signal is outputted in a case where, after the door of the aircraft is opened temporarily and then closed, it is determined that the cabin crew member has performed the predetermined action indicating that the door mode has been changed from the manual mode to the automatic mode. Therefore, it is not necessary for a person such as an operator to get into the accessor to check with the cabin crew member about the door mode. This makes labor saving possible at the time of undocking the accessor from the aircraft.

The airport ground support equipment may further include a door closing detector that detects that the door of the aircraft is in the closed state.

### Advantageous Effects of Invention

The present invention is configured as described above, and has an advantage of being able to provide airport ground support equipment that makes labor saving possible.

The above and other objects, features, and advantages of the present invention will be made clear by the following detailed description of a preferred embodiment with reference to the accompanying drawings.

### Brief Description of Drawings

FIG. 1 is a schematic plan view of a passenger boarding bridge that is one example of airport ground support equipment according to an embodiment of the present invention.
FIG. 2 is a side view schematically showing the passenger boarding bridge.
FIG. 3 is a side view showing one example of a state where a cab is docked with an aircraft.
FIG. 4 is a view showing a cab distal end part to be docked with the aircraft, the view being taken from the aircraft side.
FIG. 5 is a schematic plan view showing the distal end of the cab and the vicinity thereof.
FIG. 6 is a block diagram schematically showing a control system of the passenger boarding bridge.
FIG. 7 is a flowchart schematically showing one example of actions performed by a cabin crew member and processes performed by a controller at the time of docking the passenger boarding bridge with the aircraft.
FIG. 8 is a flowchart schematically showing one example of actions performed by a cabin crew member and processes performed by the controller at the time of undocking the passenger boarding bridge from the aircraft.

### Description of Embodiments

Hereinafter, a preferred embodiment of the present invention is described with reference to the drawings. In the drawings, the same or corresponding elements are denoted by the same reference signs, and repeating the same descriptions is avoided below. The drawings show each component schematically in order to facilitate the understanding thereof. Therefore, in some cases, the drawings may not display accurate shapes, accurate dimensional ratios, etc. The present invention is not limited to the embodiment described below.

### (Embodiment)

Airport ground support equipment according to the present embodiment is defined to encompass passenger boarding bridges, passenger step cars, airport catering trucks, etc. In the description below, a passenger boarding bridge is taken as an example of the airport ground support equipment.

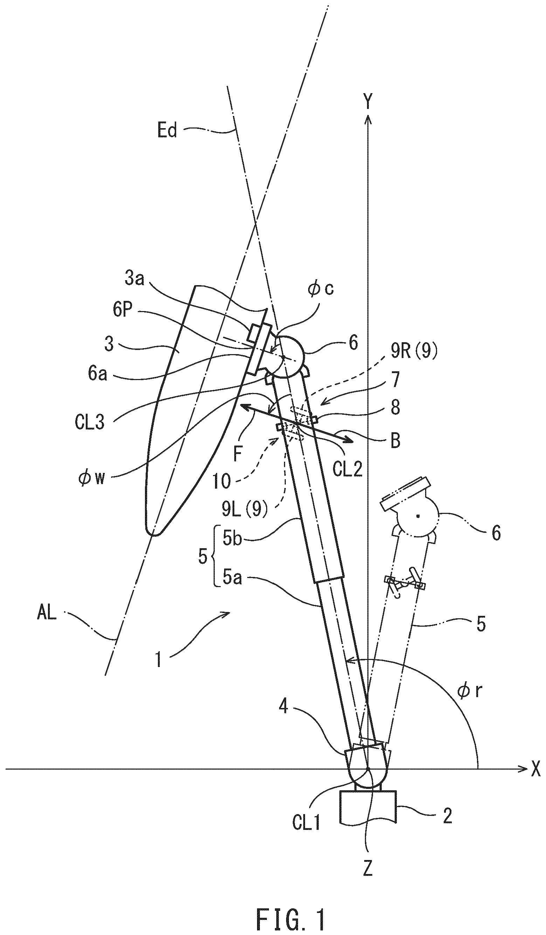

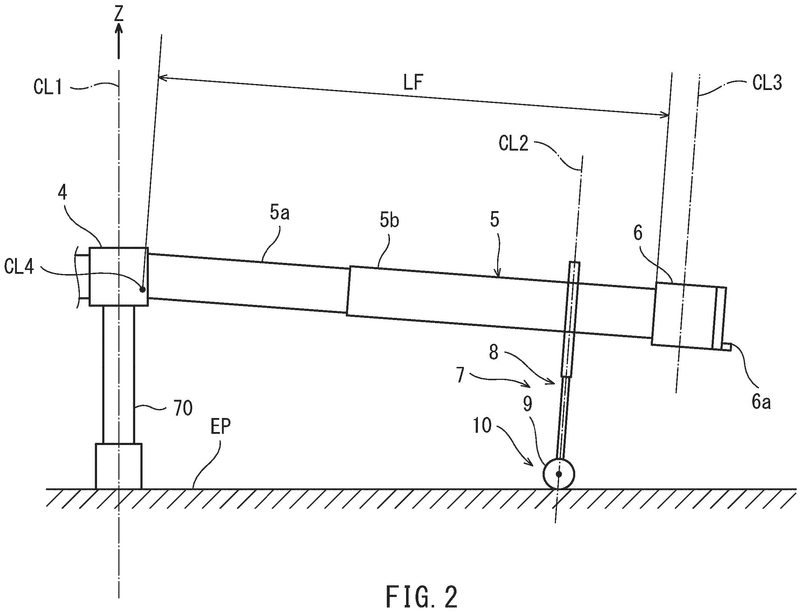

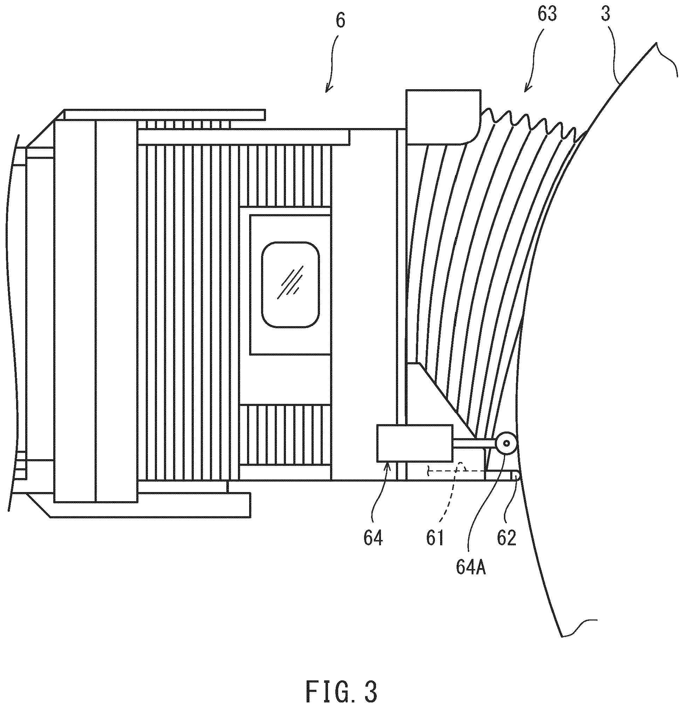

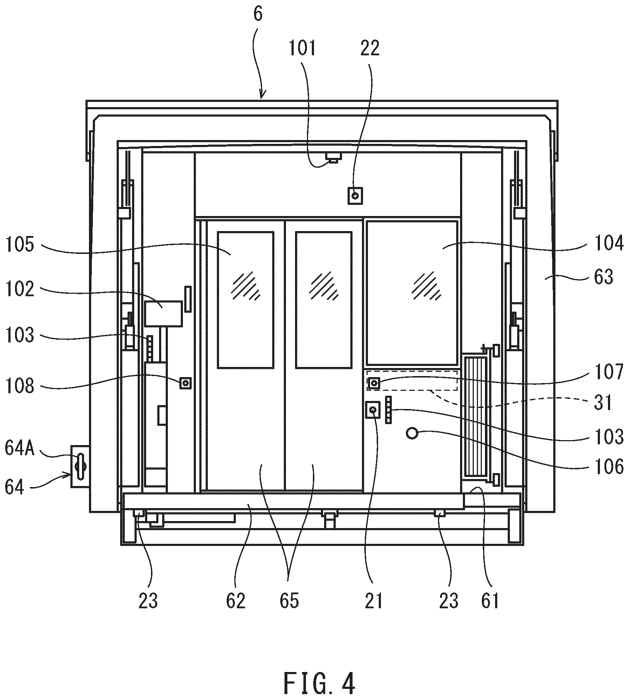

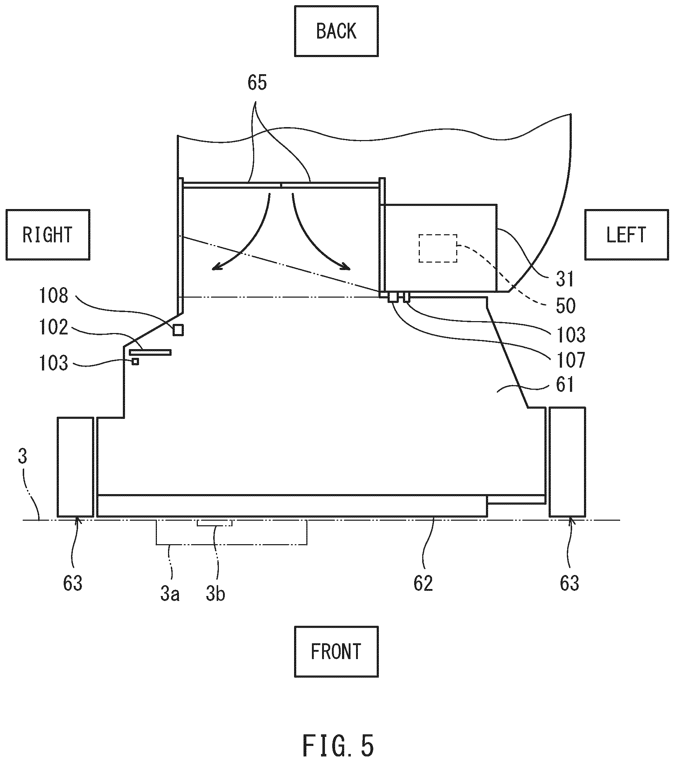

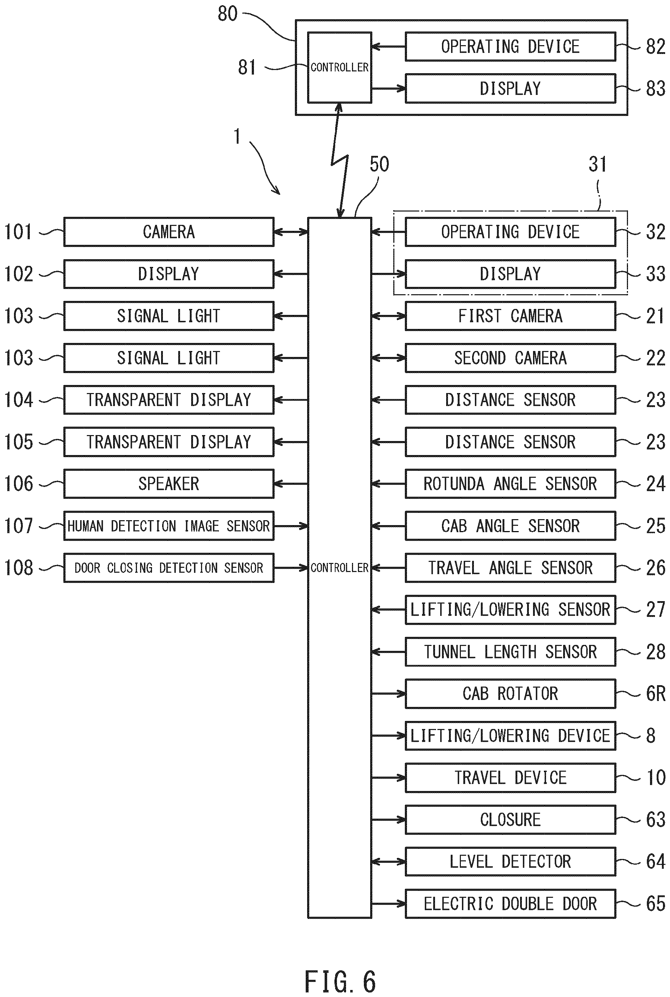

FIG. 1 is a schematic plan view showing one example of the passenger boarding bridge, which is one example of the airport ground support equipment according to the present embodiment. FIG. 2 is a schematic side view of the passenger boarding bridge. FIG. 3 is a side view showing one example of a state where a cab is docked with an aircraft. FIG. 4 is a front view of a cab distal end part to be docked with the aircraft (the front view is taken from the aircraft side). FIG. 5 is a schematic plan view showing the distal end of the cab and the vicinity thereof. FIG. 6 is a block diagram schematically showing a control system of the passenger boarding bridge.

The passenger boarding bridge 1 includes: a horizontally rotatable rotunda (proximal-end round room) 4 connected to an entrance of a terminal building 2 of an airport; a tunnel unit 5, whose proximal end is connected to the rotunda 4, the tunnel unit 5 being configured to be extendable and retractable in the longitudinal direction of the tunnel unit 5; a cab (distal-end round room) 6 provided at the distal end of the tunnel unit 5 in such a manner that the cab 6 is rotatable in regular and reverse directions; and a drive column 7. The cab 6 corresponds to an accessor.

The rotunda 4 is supported by a support pillar 70, such that the rotunda 4 is rotatable in regular and reverse directions about a rotational axis (vertical axis) CL1.

The tunnel unit 5 forms a passenger walkway, and includes a plurality of tubular tunnels 5a and 5b, which are fitted together in a nested manner, such that the tunnel unit 5 is extendable and retractable in the longitudinal direction thereof. In the description herein, the tunnel unit 5 is formed by the two tunnels 5a and 5b as one example. The tunnel unit 5 is formed by at least two tunnels. The proximal end of the tunnel unit 5 is connected to the rotunda 4 in such a manner that the proximal end of the tunnel unit 5 is swingable about a rotational axis CL4 (see FIG. 2), which extends horizontally within the rotunda 4. That is, the tunnel unit 5 is connected to the rotunda 4 in such a manner that the tunnel unit 5 is liftable and lowerable.

The drive column 7, which serves as a support leg, is mounted to the distal-side part of the tunnel unit 5 (specifically, the tunnel 5b, which is the frontmost tunnel). It should be noted that the drive column 7 may be mounted to the cab 6.

The drive column 7 is provided with a lifting/lowering device 8, which lifts and lowers the cab 6 and the tunnel unit 5. The lifting/lowering device 8 includes, for example, a pair of extendable and retractable support pillars, which supports the tunnel unit 5. The tunnel unit 5 can be lifted/lowered by extension/retraction of the pair of support pillars. Accordingly, the cab 6 and the tunnel unit 5 can be swung in the up-down direction with respect to the rotunda 4.

The drive column 7 is further provided with a travel device 10 including two travel wheels 9 (a right wheel 9R and a left wheel 9L), which are drivable to rotate independently of each other in regular and reverse directions. The travel device 10 is provided under the lifting/lowering device 8. The travel device 10 is configured to travel forward (travel in an arrow F direction) and travel backward (travel in an arrow B direction) by rotation of the two travel wheels 9. The travel device 10 is also configured to be rotatable in regular and reverse directions about a rotational axis CL2, and thereby the travel direction of the travel device 10 is changeable. By causing the travel device 10 (the travel wheels 9) to travel on an apron EP, the tunnel unit 5 can be rotated about the rotational axis CL1 of the rotunda 4 and can be extended/retracted.

The cab 6 is provided at the distal end of the tunnel unit 5. The cab 6 is configured to be rotatable, by a cab rotator 6R (see FIG. 6), in regular and reverse directions about a rotational axis CL3, which is perpendicular to the floor surface of the cab 6.

A closure 63 is provided at the distal end part of the cab 6. The closure 63 includes a bellows portion that is expandable and contractible in the front-back direction. By docking the cab 6 with an aircraft 3 and expanding the bellows portion forward, the front end of the bellows portion can be brought into contact with the aircraft 3 around a door 3a thereof.

A level detector 64 is mounted on an outer side wall of the cab 6. The level detector 64 is a device that detects the amount of relative upward/downward movement of the aircraft 3 with respect to the cab 6 when the aircraft 3 moves upward/downward due to, for example, boarding/disembarking of passengers or loading/unloading of cargo after the cab 6 is docked with the aircraft 3. When the level detector 64 is operated, a wheel 64A moves forward to come into contact with the surface of the fuselage of the aircraft 3. The wheel 64A rotates when the aircraft 3 moves upward or downward. Based on the rotation direction and rotation angle of the rotation of the wheel 64A, the level detector 64 detects the amount of upward/downward movement of the aircraft 3, and if the detected amount of the upward/downward movement of the aircraft 3 is greater than or equal to a predetermined amount, outputs the detected amount of the upward/downward movement to a controller 50. Based on the detected amount of the upward/downward movement, the controller 50 controls the lifting/lowering device 8 of the drive column 7, such that the cab 6 moves to follow the upward/downward movement of the aircraft 3.

In this example, the rotunda 4 is configured to rotate together with the tunnel unit 5. Alternatively, the tunnel unit 5 may be configured to rotate with respect to the rotunda 4 about the rotational axis CL1 in a state where the rotunda 4 is fixed. Further, in this example, the entire cab 6 is configured to rotate with respect to the tunnel unit 5. Alternatively, only the distal-side part of the cab 6, which is to be docked with the aircraft 3 and which includes the closure 63, the level detector 64, and the distal end part 6a, may be configured to rotate about the rotational axis CL3.

As shown in FIG. 4 and FIG. 5, electric double doors 65 are installed in an internal passage of the cab 6. The electric double doors 65 partition off between the distal end part 6a side of the internal passage and the inner side (i.e., tunnel unit side) of the internal passage.

As shown in FIG. 3 and FIG. 4, a bumper 62 is provided at the distal end of a floor 61 of the cab 6 to be docked with the aircraft 3. A plurality of (in this example, two) distance sensors 23 (e.g., laser distance meters) each to measure the distance between the cab 6 and the aircraft 3 are mounted to the bumper 62, such that the distance sensors 23 are arranged in the left-right direction of the bumper 62. It should be noted that the installation positions of the distance sensors 23 are changeable as necessary. For example, the distance sensors 23 may be arranged on the floor 61 of the cab 6.

Further, as shown in FIG. 4, first and second cameras 21 and 22 each to capture an image of the door 3a of the aircraft 3 are installed at respective positions that are recessed from the distal end part of the cab 6. The installation positions of these first and second cameras 21 and 22 may be changed as necessary, so long as the first and second cameras 21 and 22 are disposed away from each other and can each capture an image of the door 3a of the aircraft 3.

A camera 101 is further installed on an upper wall of the cab 6 near the distal end thereof. The camera 101 is an image capturer that captures an image including the distal end part 6a of the cab 6. When the cab 6 is in the docked state with the aircraft 3, i.e., in the accessing state to the aircraft 3, the camera 101 can capture an image of a border region. The border region is either a gap between the distal end part 6a of the cab 6 and the aircraft 3 or a region where the distal end part 6a of the cab 6 and the aircraft 3 are in contact with each other.

An operating panel 31 is installed inside the cab 6. A window located at the front of the operating panel 31 and a window of the electric double doors 65 are mounted with a transparent display 104 and a transparent display 105, respectively. The transparent displays 104 and 105 keep their transparent state when turned off. A display 102 is installed on the right side of the cab 6 near the distal end thereof. The display 102 and the transparent displays 104 and 105 can each display, for example, an image captured by the camera 101 toward an aircraft that is to be docked to the front of the cab 6.

A signal light 103 is disposed near the display 102, and another signal light 103 is disposed near the first camera 21, which is positioned forward of the operating panel 31. Each of these two signal lights 103 can be turned on in multiple colors. In this example, each signal light 103 is, for example, a signal tower light that can be turned on in four different colors that are red, yellow, green, and blue.

A speaker 106 is disposed forward of the operating panel 31. The speaker 106 can output, in the form of sound, predetermined information toward the aircraft.

Near the first camera 21 positioned forward of the operating panel 31, a human detection image sensor 107 is disposed in a manner to face the aircraft. As shown in FIG. 5, the human detection image sensor 107 can detect, through a window 3b of the door 3a of the aircraft 3 to be docked to the front of the cab 6, that a cabin crew member has performed a predetermined action. Specifically, the human detection image sensor 107 can be configured as a human vision component including: an image capturer that captures an image including the window 3b of the door 3a; and an image determiner that analyzes the image captured by the image capturer and determines whether or not a cabin crew member in the aircraft 3 has performed the predetermined action. It should be noted that the image capturer (a camera) and the image determiner may be provided separately.

A door closing detection sensor 108 is disposed on the right side of the cab 6 near the distal end thereof. The door closing detection sensor 108 detects that the door 3a of the aircraft 3 has been closed. For example, a physical object detection sensor, such as an infrared sensor, can be used as the door closing detection sensor 108. When the door 3a is in a closed state, the door closing detection sensor 108 detects the door 3a and outputs a detection signal, whereas when the door 3a is in an opened state, the door closing detection sensor 108 does not detect the door 3a and outputs no detection signal.

Further, as shown in FIG. 6, the passenger boarding bridge 1 includes: a rotunda angle sensor 24, which detects a rotational angle Φr (see FIG. 1) of the rotunda 4; a cab angle sensor 25, which detects a rotational angle Φc (see FIG. 1) of the cab 6 with respect to a center line Ed of the tunnel unit 5; a travel angle sensor 26, which detects a rotational angle Φw (an angle indicating a travel direction) (see FIG. 1) of the travel device 10 with respect to the center line Ed of the tunnel unit 5 as seen in a plan view; a lifting/lowering sensor 27, which detects the amount of lifting/lowering by the lifting/lowering device 8; and a tunnel length sensor 28, which detects the length of the tunnel unit 5 (e.g., a length LF in FIG. 2) and which is configured as, for example, a distance meter. These sensors are arranged at suitable positions, respectively.

The operating panel 31 installed inside the cab 6 includes an operating device 32 and a display 33. The operating device 32 includes various operation switches, an operating lever, etc. With use of these, an operator can perform, for example, an operation of lifting/lowering the tunnel unit 5 and the cab 6 by the lifting/lowering device 8, an operation of rotating the cab 6 by the cab rotator 6R, and a traveling operation by the travel device 10.

The controller 50 is disposed, for example, in the cab 6 (illustratively shown in FIG. 5) or in the frontmost tunnel 5b. The controller 50 may be configured in any manner, so long as the controller 50 has control functions. The controller 50 includes, for example, an arithmetic operation unit such as a CPU and a storage unit including a ROM, RAM, etc. A control program for operating the components of the passenger boarding bridge 1 and information necessary for the operations of the components of the passenger boarding bridge 1 are prestored in the storage unit. As a result of the arithmetic operation unit (CPU) executing the control program, the operations of the components, such as the cab rotator 6R, the lifting/lowering device 8, the travel device 10, the closure 63, the level detector 64, and the electric double doors 65, can be controlled. Information to be stored while the passenger boarding bridge 1 is operating is also stored in the storage unit. It should be noted that the controller 50 may be configured as a single control device that performs centralized control, or may be configured as a plurality of control devices that perform distributed control in cooperation with each other.

Information (operation information) such as an operation command based on an operation performed with the operating device 32 is inputted to the controller 50. The controller 50 can control operations of the components of the passenger boarding bridge 1 based on operations performed with the operating device 32. The controller 50 outputs, for example, information to be displayed on the display 33.

Captured image data from each of the first and second cameras 21 and 22 is inputted to the controller 50, and also, output signals from the sensors 23 to 28 are inputted to the controller 50.

Captured image data from the camera 101 is also inputted to the controller 50, and also, output signals from the human detection image sensor 107 and the door closing detection sensor 108 are inputted to the controller 50. The controller 50 controls the display 102, the signal lights 103, the transparent displays 104 and 105, and the speaker 106. The controller 50 can cause the display 102 and the transparent displays 104 and 105 to display, for example, an image captured by the camera 101. The controller 50 can also cause the speaker 106 to make a predetermined announcement (i.e., to perform a sound output) as necessary. The contents of the announcement are prestored in the storage unit as an audio file.

The controller 50 is configured such that, for example, a controller 81 of remote operation equipment 80 installed in a central monitoring room of the terminal building and the controller 50 are communicable with each other. The communication between them may be wireless and/or wired communication, and a communication device for the communication may be installed separately. The remote operation equipment 80 includes the controller 81, an operating device 82, a display 83, and so forth.

The configuration of the operating device 82 is substantially the same as that of the operating device 32 of the passenger boarding bridge 1. Accordingly, an operator can enter the cab 6 of the passenger boarding bridge 1, and directly operate the passenger boarding bridge 1 by using the operating device 32. Also, by using the operating device 82 of the remote operation equipment 80, the operator can select the passenger boarding bridge 1 to be remotely operated, and remotely operate the selected passenger boarding bridge 1. Then, in the case of manual control, the operator operates the operating device 32 or the operating device 82 to cause the components of the passenger boarding bridge 1 to operate, thereby moving the passenger boarding bridge 1 from a standby position to dock the passenger boarding bridge 1 with the door 3a (to be exact, around the door 3a) of the aircraft 3. Also, in the case of automatic control, by pressing an automatic docking start button included in the operating device 32 or 82, the operator can move the passenger boarding bridge 1 from the standby position to dock the passenger boarding bridge 1 with the door 3a of the aircraft 3. It should be noted that the standby position is a predetermined position where the passenger boarding bridge 1 stands by until the aircraft 3 arrives at the apron. In the case of undocking the passenger boarding bridge 1 from the door 3a of the aircraft 3, by pressing an automatic undocking start button included in the operating device 32 or 82, the operator can bring the passenger boarding bridge 1 back to the predetermined standby position by automatic control.

The controller 81 (which is hereinafter also referred to as "remote controller 81") of the remote operation equipment 80 and the controller 50 of the passenger boarding bridge 1 to be remotely operated transmit and receive to and from each other, for example, information necessary for the remote operation of the passenger boarding bridge 1. For example, the remote controller 81 transmits, to the controller 50 of the passenger boarding bridge 1, necessary operation information (e.g., an automatic docking start signal) from the operating device 82 in order to perform the remote operation of the passenger boarding bridge 1. The controller 50 of the passenger boarding bridge 1 transmits, in real time, image data of images captured by the cameras 21, 22, 101, etc. of the passenger boarding bridge 1 to the remote controller 81.

The remote operation equipment 80 includes a camera image display (not shown) that obtains captured image data of images captured by the cameras 21, 22, 101, etc. of the passenger boarding bridge 1 and that displays the captured images in real time. The method of displaying the images is non-limiting. For example, images captured by multiple cameras may be displayed concurrently by splitting up a display screen of the camera image display into multiple display sections, or an image displayed on the display screen may be switched from one image to another through camera selection. It should be noted that the display 83 may be configured to double as the camera image display.

The remote controller 81 can obtain, from the controller 50 of the passenger boarding bridge 1, current positional information about a predetermined part of the passenger boarding bridge 1 (e.g., a predetermined position 6P on the distal end part 6a of the cab 6, or the center position of the travel device 10), the predetermined part being displayed by the display 33 of the passenger boarding bridge 1, and can cause the display 83 to display the obtained current positional information. It should be noted that the controller 50 of the passenger boarding bridge 1 recognizes, in real time, the position of the predetermined part of the passenger boarding bridge 1 (the position being expressed as three-dimensional position coordinates) by using, for example, a three-dimensional orthogonal coordinate system in which the intersection point of the rotational axis CL1 of the rotunda 4 and the plane of the apron EP is set as the origin. The controller 50 is configured to calculate the position of the predetermined part of the passenger boarding bridge 1 based on, for example, detection values of the rotunda angle sensor 24, the cab angle sensor 25, the lifting/lowering sensor 27, and the tunnel length sensor 28.

Next, one example of operations of the passenger boarding bridge 1 is described. Operations of the passenger boarding bridge 1 are realized by the control performed by the controller 50.

Before the aircraft 3 arrives at the apron, the passenger boarding bridge 1 stands by at a predetermined standby position indicated by two-dot chain line in FIG. 1. The aircraft 3 is brought to a stop while targeting at a predetermined stop position. The predetermined stop position is such a position that when the aircraft 3 is at the predetermined stop position, the aircraft axis of the aircraft 3 is on a fuselage guide line AL drawn on the apron, and the predetermined stop position is set in the extending direction of the fuselage guide line AL.

Movement of the cab 6 after the aircraft 3 is parked as above is briefly described hereinafter. The cab 6 moves from the standby position, and consequently, the distal end part 6a of the cab 6 gets docked with a part of the aircraft 3, the part being located immediately below the door 3a. Thereafter, at the time of undocking the cab 6 from the aircraft 3, the cab 6 returns to and stops at the standby position, and waits at the standby position until an operation of docking the cab 6 with the next aircraft is started. It should be noted that at the time of undocking the cab 6 from the aircraft 3 and returning the cab 6 to the standby position, a target position (target position coordinates) of the travel device 10 for the cab 6 to be at the standby position is prestored in the controller 50.

It should be noted that a state where the cab 6 is in close proximity to the parked aircraft 3 and the distal end part 6a of the cab 6 is docked with a part of the aircraft 3, the part being located immediately below the door 3a (i.e., accessing state), is a state where the distal end part 6a of the cab 6 is adjacent to or in contact with the aircraft 3. That is, the accessing state may be a state where a slight gap that would not hinder walking between the cab 6 and the aircraft 3 is formed between the bumper 62 of the distal end part 6a of the cab 6 and the aircraft 3, or may be a state where the bumper 62 is in contact with the aircraft 3.

A cabin crew member in the aircraft 3 sets the door mode to an automatic mode when the aircraft 3 is going to take off, and sets the door mode to a manual mode when the aircraft 3 has landed. In a case where the door mode is in the automatic mode, if the door 3a of the aircraft 3 is opened, an evacuation slide is activated, whereas in a case where the door mode is in the manual mode, even if the door 3a of the aircraft 3 is opened, the evacuation slide will not be activated. When the aircraft 3 has landed, if the cabin crew member forgets to change the door mode from the automatic mode to the manual mode and opens the door 3a, then the evacuation slide will be activated, which will put workers and others on the apron in danger. Thus, there are two different types of door modes, one of which is the automatic mode in which the evacuation slide is activated in response to opening of the door 3a, and the other is the manual mode in which the evacuation slide is not activated even if the door 3a of the aircraft 3 is opened. The automatic mode is also referred to as "armed mode", and the manual mode is also referred to as "disarmed mode".

### [Remote Operation at Docking]

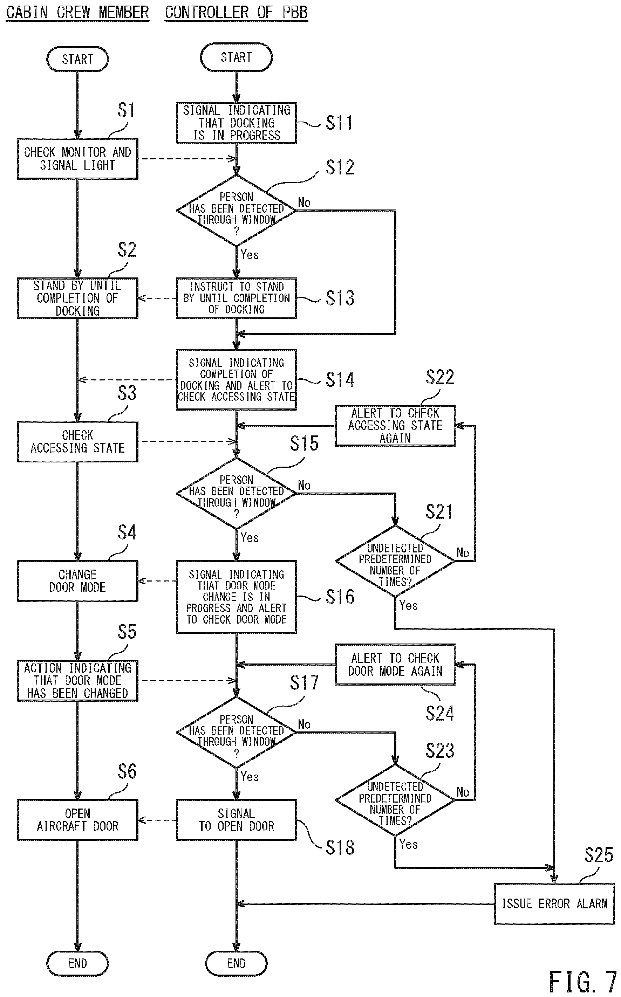

Next, a case where the passenger boarding bridge 1 is docked with the aircraft 3 by remote operation is described. FIG. 7 is a flowchart schematically showing one example of actions performed by a cabin crew member and processes performed by the controller 50 at the time of docking the passenger boarding bridge 1 with the aircraft 3 by remote operation.

First, an operator uses the operating device 82 of the remote operation equipment 80 to select the passenger boarding bridge 1 to be remotely operated, and presses the automatic docking start button. In response, the controller 81 transmits an automatic docking start signal to the controller 50 of the passenger boarding bridge 1 to be remotely operated. In response, the controller 50 starts automatic docking. The controller 50 starts automatic docking to dock the cab 6 with the aircraft 3. Here, in the case of moving the cab 6 from the standby position to dock the distal end part 6a of the cab 6 with the door 3a (to be exact, around the door 3a) of the aircraft 3 by automatic docking, i.e., by automatic control, for example, the controller 50 captures images of the door 3a of the aircraft 3 by the cameras 21 and 22 installed on the cab 6, recognizes the three-dimensional position of the door 3a from, for example, these captured images, and calculates a position (docking position) at which the distal end part 6a of the cab 6 gets docked with the aircraft 3.

Then, the controller 50 controls the travel device 10, the lifting/lowering device 8, and the cab rotator 6R to move the distal end part 6a of the cab 6 to the aforementioned docking position, thereby docking the distal end part 6a of the cab 6 with the aircraft 3. It should be noted that the docking position may be calculated before starting to move the cab 6 and while moving the cab 6, i.e., may be calculated multiple times. The docking position may be calculated by using detection values from the distance sensors 23. Next, the controller 50 causes the closure 63 to extend such that the bellows portion expands to come into contact with the aircraft 3, and actuates the level detector 64. In this manner, the docking of the passenger boarding bridge 1 with the aircraft 3 is completed.

For example, after receiving the automatic docking start signal transmitted by the above-described remote operation, the controller 50 turns on the signal lights 103 in red as a signal indicating that the docking is in progress (step S11). Also, the controller 50 causes each of the monitors 102, 104, and 105 to display an image captured by the camera 101. The timing of starting displaying the captured image may be any predetermined timing during a period after the start of the docking and before the completion of the docking. It should be noted that, in the description herein, the display 102 and the transparent displays 104 and 105 are occasionally referred to as the monitors 102, 104, and 105 as above.

There is a case where, before the docking is completed, a cabin crew member brings their face close to the window 3b of the door 3a of the aircraft 3 to check the monitors 102, 104, 105, and the signal lights 103 (step S1). In this case, when the human detection image sensor 107 detects a person's face through the window 3b of the door 3a of the aircraft 3 (Yes in step S12), the controller 50 instructs the cabin crew member to stand by until the completion of the docking by using the speaker 106 and the monitors 102, 104, and 105 (step S13). This instruction may be given by outputting a predetermined message from the speaker 106 as an audio message, or by displaying a predetermined message, predetermined mark, or the like on the monitors 102, 104, and 105 together with the image captured by the camera 101.

When the docking is completed, the controller 50 turns on the signal lights 103 in yellow as a signal indicating the completion of the docking, and by using the speaker 106 and the monitors 102, 104, and 105, alerts the cabin crew member to check that the space, or the contact state, between the aircraft 3 and the distal end part 6a of the floor of the cab 6 is a proper space or a proper contact state, i.e., alerts the cabin crew member to check that the accessing state is a proper state (step S14). Alerting the cabin crew member to check the accessing state may be performed by outputting a predetermined message from the speaker 106 as an audio message, or by displaying a predetermined message, predetermined mark, or the like on the monitors 102, 104, and 105.

The cabin crew member stands by until the completion of the docking (step S2), and after the completion of the docking, brings their face to the window 3b to check that the signal lights 103 have been turned on in yellow, and also looks at the image captured by the camera 101 and displayed on the monitors 102, 104, and 105 to check that the accessing state is a proper state (step S3). Here, the cabin crew member bringing their face close to the window 3b is an action of checking the accessing state.

When the controller 50 detects, with the human detection image sensor 107, a person's face through the window 3b of the door 3a of the aircraft 3 (Yes in step S15), the controller 50 turns on the signal lights 103 in green as a signal indicating that a door mode change is in progress, in other words, as a signal to urge a change in the door mode, and by using the speaker 106 and the monitors 102, 104, and 105, alerts the cabin crew member to check the door mode (step S16). This alert may be one that urges the cabin crew member to change the door mode to the manual mode, or may be one that urges the cabin crew member to check that the door mode is in the manual mode. Alerting the cabin crew member may be performed by outputting a predetermined message from the speaker 106 as an audio message, or by displaying a predetermined message, predetermined mark, or the like on the monitors 102, 104, and 105.

The cabin crew member checks whether the door mode is in the manual mode. If the door mode is in the automatic mode, the cabin crew member changes the door mode to the manual mode (step S4), and performs a predetermined action indicating that the door mode has been changed (step S5). The predetermined action may be, for example, bringing their face close to the window 3b, or may be holding their palm over the window 3b.

When the controller 50 detects the action made by the cabin crew member, the action indicating that the door mode has been changed, with the human detection image sensor 107 (e.g., detects a person's face) through the window 3b of the door 3a of the aircraft 3 (Yes in step S17), the controller 50 turns on the signal lights 103 in blue as an instruction to open the door 3a of the aircraft 3 (step S18) and opens the electric double doors 65.

The cabin crew member checks that the signal lights 103 are in the state of being turned on in blue, and opens the door 3a of the aircraft 3 (step S6).

It should be noted that in steps S12 and S15, to prevent erroneous detection, for example, if the human detection image sensor 107 has continuously detected a person for a first predetermined period (e.g., for two seconds), it may be determined that the person has been detected. In a case where a person is undetected in step S15, it is determined whether or not a person is undetected a predetermined number of times (e.g., three times) (step S21), and if the number of times a person is undetected has not yet reached the predetermined number of times, an alert to check the accessing state is given again by using the speaker 106 and the monitors 102, 104, and 105 (step S22). If the number of times a person is undetected has reached the predetermined number of times, the controller 50 issues an abnormality alarm (step S25).

Also in step S17, to prevent erroneous detection, for example, if the human detection image sensor 107 has continuously detected a person for the first predetermined period (e.g., two seconds), it may be determined that the person has been detected. In a case where a person is undetected in step S17, it is determined whether or not a person is undetected a predetermined number of times (e.g., three times) (step S23), and if the number of times a person is undetected has not yet reached the predetermined number of times, an alert to check the door mode is given again by using the speaker 106 and the monitors 102, 104, and 105 (step S24). If the number of times a person is undetected has reached the predetermined number of times, the controller 50 issues an abnormality alarm (step S25).

In step S25, for example, the controller 50 may notify a worker on the apron EP of the occurrence of abnormality by using a speaker (not shown) disposed outside the passenger boarding bridge 1. The worker is a skilled worker capable of manually operating the passenger boarding bridge 1. Also, in step S25, the controller 50 may transmit an abnormality signal to the remote operation equipment 80. In the remote operation equipment 80, based on the abnormality signal, the controller 81 causes the display 83 and/or a speaker (not shown) included in the remote operation equipment 80 to output a message indicating the occurrence of abnormality. The message indicating the occurrence of abnormality may also indicate that manual operation is necessary.

As described above, in the present embodiment, a cabin crew member can check that the accessing state is a proper state by looking at the image captured by the camera 101 and displayed on the monitors 102, 104, and 105. Therefore, it is not necessary for a person such as an operator to get into the cab 6 to notify the cabin crew member that the accessing state is a proper state. This makes labor saving possible at the time of docking the passenger boarding bridge 1 with the aircraft 3. Further, after detecting the action made by the cabin crew member, the action indicating that the door mode has been changed (step S17), the controller 50 gives an instruction to open the door 3a of the aircraft 3 (step S18). In this manner, safety when the door 3a is opened can be ensured.

In the above description, each of the display 102, the transparent display 104, and the transparent display 105 is used as an image presenter to present an image of the accessing state toward the window 3b of the door 3a of the aircraft 3. Alternatively, only one of these displays 102, 104, and 105 may serve as the image presenter. Also, as the image presenter, a mirror such as a convex mirror may be installed at a suitable position so as not to block the boarding/disembarking of the passengers, for example, installed near the display 102.

It should be noted that the steps shown in the flowchart of FIG. 7 are merely one example. There may be a case where the cabin crew member has already changed the door mode to the manual mode before the completion of the docking. Accordingly, after step S14, in a case where the human detection image sensor 107 continuously detects a person for a predetermined period (e.g., 4 to 5 seconds), the controller 50 may perform step S16 in the middle of it, and after the predetermined period has elapsed, the controller 50 may perform step S18.

In the above description, each of the speaker 106 and the monitors 102, 104, and 105 serves as a first notifier that gives a notification toward the aircraft 3 regarding a matter to be paid attention to before opening the door 3a of the aircraft 3 and that also gives a notification toward the aircraft 3 to urge a change in the door mode from the automatic mode to the manual mode as in, for example, steps S14 and S16. Also, the signal lights 103 serve as a second notifier that gives, based on a result of the detection by the human detection image sensor 107, a notification toward the cabin crew member in the aircraft 3 regarding progress on the checking steps at the time of opening the door 3a, such as "SIGNAL INDICATING THAT DOOR MODE CHANGE IS IN PROGRESS" in step S16 and "SIGNAL TO OPEN DOOR" in step S17. It should be noted that this function of the second notifier may be realized by the speaker 106 and the monitors 102, 104, and 105.

### [Remote Operation at Undocking]

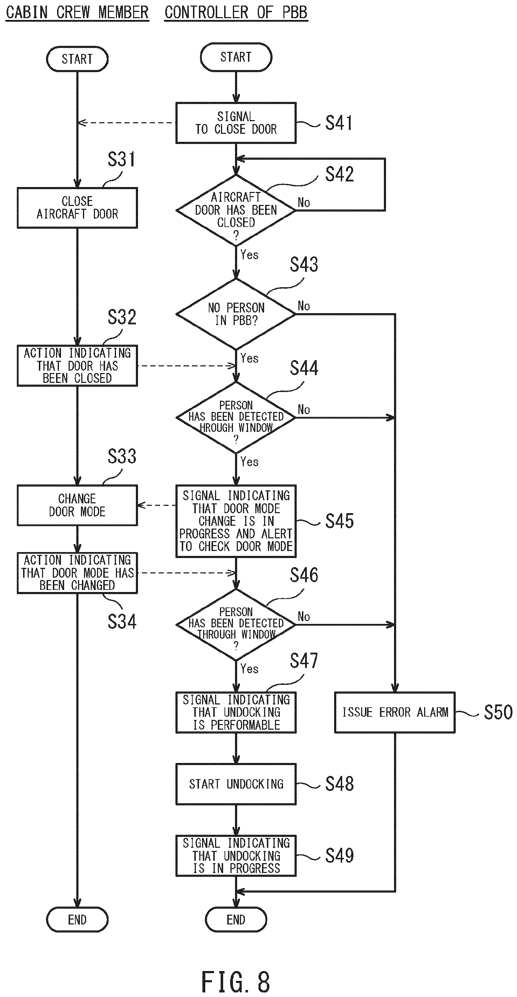

Next, a case where the passenger boarding bridge 1 is undocked from the aircraft 3 by remote operation is described. FIG. 8 is a flowchart schematically showing one example of actions performed by a cabin crew member and processes performed by the controller 50 at the time of undocking the passenger boarding bridge 1 from the aircraft 3 by remote operation.

A signal to close the door in step S41 is the signal lights 103 being turned on in blue. Here, the state of turning on the signal lights 103 in blue in step S18 of FIG. 7 has been continuing up to this point. That is, in step S18 of FIG. 7, the signal lights 103 being turned on in blue serves as a signal to open the door, whereas in step S41 of FIG. 8, the signal lights 103 being turned on in blue serves as a signal to close the door.

A cabin crew member checks that the signal lights 103 are in the state of being turned on in blue, and then closes the door 3a of the aircraft 3 (step S31) and performs a predetermined action indicating that the door 3a has been closed (step S32). The predetermined action may be, for example, bringing their face close to the window 3b, or may be holding their palm over the window 3b.

Meanwhile, based on presence or absence of a detection signal from the door closing detection sensor 108, the controller 50 determines whether or not the door 3a of the aircraft 3 has been closed (step S42). When detecting the closed door 3a of the aircraft 3, the door closing detection sensor 108 outputs a detection signal to the controller 50.

When receiving an input of the detection signal from the door closing detection sensor 108, the controller 50 determines that the door 3a of the aircraft 3 has been closed (Yes in step S42), and determines whether or not there is no person inside the passenger boarding bridge 1 (step S43). For example, at least one inside image capturing camera that captures an image of the inside of the passenger boarding bridge 1 may be installed inside the passenger boarding bridge 1, and the determination in step S43 may be performed based on an analysis result on the image captured by the inside image capturing camera. Further, a motion sensor may be installed inside the passenger boarding bridge 1, and the determination in step S43 may be performed based on the aforementioned analysis result on the captured image and a detection result from the motion sensor. In a case where it is determined in step S43 that there is a person inside the passenger boarding bridge 1, the controller 50 issues an abnormality alarm (step S50). In a case where it is determined No in step S43, the flow proceeds to step S50, in which, for example, an audio message to urge the person inside to get out of the passenger boarding bridge 1 may be outputted by using a speaker installed inside the passenger boarding bridge 1. Further, the controller 50 may transmit an abnormality signal to the remote operation equipment 80.

Next, when the controller 50 detects the predetermined action made by the cabin crew member, the predetermined action indicating that the door 3a has been closed, with the human detection image sensor 107 (e.g., detects a person's face) through the window 3b of the aircraft 3 (Yes in step S44), the controller 50 turns on the signal lights 103 in green as a signal indicating that a door mode change is in progress, in other words, as a signal to urge a change in the door mode, and by using the speaker 106 and the monitors 102, 104, and 105, alerts the cabin crew member to check the door mode (step S45). This alert may be one that urges the cabin crew member to change the door mode to the automatic mode, or may be one that urges the cabin crew member to check that the door mode is in the automatic mode. Alerting the cabin crew member may be performed by outputting a predetermined message from the speaker 106 as an audio message, or by displaying a predetermined message, predetermined mark, or the like on the monitors 102, 104, and 105.

The cabin crew member checks whether the door mode is in the automatic mode. If the door mode is in the manual mode, the cabin crew member changes the door mode to the automatic mode (step S33), and performs a predetermined action indicating that the door mode has been changed (step S34). The predetermined action may be, for example, bringing their face close to the window 3b, or may be holding their palm over the window 3b.

When the controller 50 detects the action made by the cabin crew member, the action indicating that the door mode has been changed, with the human detection image sensor 107 (e.g., detects a person's face) through the window 3b (Yes in step S46), the controller 50 turns on the signal lights 103 in yellow as a signal indicating that undocking is performable (step S47). At the time, the controller 50 transmits, to the remote operation equipment 80, which is a notifier, an undocking performable signal indicating that the cab 6 is undockable from the aircraft 3.

In the remote operation equipment 80, upon receiving the undocking performable signal, the controller 81, for example, displays on the display 83 a message indicating that the passenger boarding bridge 1 is undockable or a message indicating that preparation for undocking has been done. Looking at the displayed message, the operator presses the automatic undocking start button included in the operating device 82, and as a result, an operation signal is inputted to the controller 81. The controller 81, when the operation signal is inputted thereto, transmits an automatic undocking start signal to the controller 50.

Upon receiving the automatic undocking start signal, the controller 50 closes the electric double doors 65 and starts automatic undocking (step 48), and turns on the signal lights 103 in red as a signal indicating that the undocking is in progress (step S49). When the automatic undocking has started, the controller 50 stops the level detector 64 from operating, and retracts the closure 63. Thereafter, the controller 50 brings the cab 6 back to the predetermined standby position by controlling the travel device 10, the lifting/lowering device 8, and the cab rotator 6R. It should be noted that the electric double doors 65 may be closed after it is determined Yes in step S43.

It should be noted that in steps S44 and S46, to prevent erroneous detection, for example, if the human detection image sensor 107 has continuously detected a person for the first predetermined period (e.g., two seconds), it may be determined that the person has been detected. In a case where a person is undetected in steps S44 and S46, the controller 50 issues an abnormality alarm (step S50). In step S46, as in steps S17, S23, and S24 in FIG. 7, if the number of times a person is undetected has not yet reached a predetermined number of times, an alert to check the door mode may be given again by using the speaker 106 and the monitors 102, 104, and 105, and if the number of times a person is undetected has reached the predetermined number of times, the controller 50 may issue an abnormality alarm.

In a case where it is determined No in step S44 or S46, the flow proceeds to step S50, in which, for example, the controller 50 may notify a worker on the apron EP of the occurrence of abnormality by using a speaker (not shown) disposed outside the passenger boarding bridge 1. The worker is a skilled worker capable of manually operating the passenger boarding bridge 1. Also, in step S50, the controller 50 may transmit an abnormality signal to the remote operation equipment 80. In the remote operation equipment 80, based on the abnormality signal, the controller 81 causes the display 83 or a speaker (not shown) included in the remote operation equipment 80 to output a message indicating the occurrence of abnormality. The message indicating the occurrence of abnormality may also indicate that manual operation is necessary.

As described above, in the present embodiment, after detecting an action made by a cabin crew member, the action indicating that the door mode has been changed (step S46), the controller 50 outputs the undocking performable signal in step S47. Therefore, it is not necessary for a person such as an operator to get into the cab 6 to check with the cabin crew member about the door mode. This makes labor saving possible at the time of undocking the passenger boarding bridge 1 from the aircraft 3.

It should be noted that the steps shown in the flowchart of FIG. 8 are merely one example. There may be a case where immediately after the door 3a of the aircraft 3 is closed (step S31), the cabin crew member changes the door mode to the automatic mode. Accordingly, after it is determined in step S43 that there is no person inside the passenger boarding bridge 1, in a case where the human detection image sensor 107 continuously detects a person for a predetermined period (e.g., 4 to 5 seconds), the controller 50 may perform step S45 in the middle of it, and after the predetermined period has elapsed, the controller 50 may perform step S47. Further, step S43 may be eliminated, in which case, after it is determined in step S42 that the door 3a has been closed, in a case where the human detection image sensor 107 continuously detects a person for a predetermined period (e.g., 4 to 5 seconds), the controller 50 may perform step S45 in the middle of it, and after the predetermined period has elapsed, the controller 50 may perform step S47.

It should be noted that, in the present embodiment, the door closing detection sensor 108 is used as a door closing detector to detect that the door 3a of the aircraft 3 is in a closed state. Instead of or in addition to this, images captured by the cameras 21 and 22, each of which captures an image of the door 3a, may be analyzed to detect that the door 3a has been closed.

Further, an operator in the central monitoring room may, for example, look at the images captured by the cameras 21 and 22 and displayed on the camera image display to determine whether or not there is abnormality on the door 3a, and may transmit information about a result of this determination (hereinafter, referred to as "determination result information") to the controller 50 by operating the remote operation equipment 80. This determination result information may contain information that indicates an opened state of the door 3a as "there is abnormality" and that indicates a closed state of the door 3a as "there is no abnormality". In this case, instead of or in addition to step S42, in which determination is made based on a result of the detection by the door closing detector, the controller 50 may include a step of determining whether or not there is abnormality on the door 3a based on the above received determination result information. Further, upon receiving the above determination result information from the remote operation equipment 80, the controller 50 may notify the cabin crew member of the presence or absence of abnormality on the door 3a, which is indicated by the determination result information, through the speaker 106, the monitors 102, 104, and 105, the signal lights 103, etc.

In the present embodiment, instead of the human detection image sensor 107, a window image capturing camera that is an image capturer to capture an image including the window 3b of the door 3a may be installed. The image captured by the window image capturing camera may be transmitted from the controller 50 to the remote operation equipment 80, and may be displayed, for example, on the camera image display included in the remote operation equipment 80. Then, an operator in the central monitoring room may monitor the image captured by the window image capturing camera and displayed on the camera image display, and based thereon determine whether or not a predetermined action has been performed by a cabin crew member. The operator may transmit information about a result of this determination (hereinafter, referred to as "determination result information") to the controller 50 by operating the remote operation equipment 80. In this case, the controller 50 performs steps S12, S 15, and S17 in FIG. 7 and steps S44 and S46 in FIG. 8 based on the determination result information, which is received from the remote operation equipment 80.

The above present embodiment has described an example in which the remote operation equipment 80 is installed in the central monitoring room. Alternatively, the remote operation equipment 80 may be installed not in the central monitoring room but at a different location. The remote operation equipment 80 may be realized by a portable communication terminal, such as a tablet or smartphone. In this case, for example, a remote operation program for remotely operating the passenger boarding bridge is installed on the portable communication terminal. Alternatively, the portable communication terminal may function as a web browser that accesses a remote operation program stored in a web server, and may remotely operate the passenger boarding bridge.

In the present embodiment, the passenger boarding bridge has been described as one example of airport ground support equipment. The present invention is applicable to airport ground support equipment that includes an accessor. The accessor comes close to a parked aircraft, and when the distal end of the accessor is adjacent to or in contact with the aircraft, i.e., when the accessor is in the accessing state, the accessor allows persons and/or articles to move between the accessor and the aircraft through an opening formed in a case where a door of the aircraft has been opened. Examples of such airport ground support equipment include a passenger boarding bridge, a passenger step car, and an airport catering truck.

From the foregoing description, numerous modifications and other embodiments of the present invention are obvious to those skilled in the art. Accordingly, the foregoing description is to be construed as illustrative only, and is provided for the purpose of teaching those skilled in the art the best mode for carrying out the present invention. The structural and/or functional details may be substantially modified without departing from the scope of the present invention.

### Industrial Applicability

The present invention is useful as, for example, airport ground support equipment that makes labor saving possible.

### Reference Signs List

- 1: passenger boarding bridge
- 3: aircraft
- 3a: door of the aircraft
- 3b: window of the door of the aircraft
- 6: cab
- 101: camera
- 102: display
- 103: signal light
- 104, 105: transparent display
- 106: speaker
- 107: human detection image sensor
- 108: door closing detection sensor

## Claims

1. Airport ground support equipment comprising:
an accessor that allows, when the accessor is in an accessing state where the accessor is in close proximity to a parked aircraft and a distal end of the accessor is adjacent to or in contact with the aircraft, a person and/or an article to move between the accessor and the aircraft through an opening formed in a case where a door of the aircraft has been opened; and
an image presenter that is provided on the accessor and that presents an image of the accessing state of the accessor toward the aircraft when the door of the aircraft is in a closed state.

2. The airport ground support equipment according to claim 1, further comprising:
an image capturer that is provided on the accessor and that captures an image including the distal end of the accessor when the accessor is in the accessing state, wherein
the image presenter is a display that displays, toward the aircraft, the image captured by the image capturer.

3. The airport ground support equipment according to claim 1, wherein
the image presenter is a mirror, and
the mirror is disposed on the accessor such that the accessing state of the accessor is visible from the aircraft side via a mirrored image shown on the mirror.

4. The airport ground support equipment according to any one of claims 1 to 3, further comprising:
a first notifier that gives a notification toward the aircraft regarding a matter to be paid attention to before opening the door of the aircraft.

5. The airport ground support equipment according to claim 4, wherein
the first notifier gives a notification toward the aircraft to urge a change in a door mode of the aircraft from an automatic mode to a manual mode.

6. The airport ground support equipment according to any one of claims 1 to 5, further comprising:
an image capturer that captures an image including a window of the door of the aircraft;
an image determiner that analyzes the image captured by the image capturer and determines whether or not a cabin crew member in the aircraft has performed a predetermined action; and
a second notifier that gives, based on a result of determination by the image determiner, a notification toward the aircraft regarding progress on checking steps at a time of opening the door of the aircraft.

7. The airport ground support equipment according to claim 6, further comprising:
a signal outputter that outputs, to a predetermined notifier, an undocking performable signal indicating that the accessor is undockable from the aircraft in a case where, after the door of the aircraft is opened temporarily and then closed, the image determiner analyzes the image captured by the image capturer and determines that the cabin crew member has performed the predetermined action indicating that a door mode of the aircraft has been changed from a manual mode to an automatic mode.

8. The airport ground support equipment according to any one of claims 1 to 5, further comprising:
an image capturer that captures an image including a window of the door of the aircraft;
an image determiner that analyzes the image captured by the image capturer and determines whether or not a cabin crew member in the aircraft has performed a predetermined action indicating that a door mode of the aircraft has been changed from a manual mode to an automatic mode; and
a signal outputter that outputs, to a predetermined notifier, an undocking performable signal indicating that the accessor is undockable from the aircraft in a case where, after the door of the aircraft is opened temporarily and then closed, the image determiner analyzes the image captured by the image capturer and determines that the cabin crew member has performed the predetermined action.

9. The airport ground support equipment according to claim 7 or 8, further comprising:
a door closing detector that detects that the door of the aircraft is in the closed state.
